# EUROPEAN PATENT SPECIFICATION

(11) **EP 0 766 032 B1**
(45) Date of publication and mention of the grant of the patent: **08.12.1999**
(21) Application number: 96660058.7
(22) Date of filing: 12.09.1996
(51) Int. Cl.: F16L 5/00, F16L 5/10

(54) **Installation device for feed-through sleeves**
Installationsgerät für Manschettendurchführung
Dispositif d'installation pour traversée de manchons

(30) Priority: 13.09.1995 FI 954279
(43) Date of publication of application: 02.04.1997
(73) Proprietor: Partanen, Vesa Antero, 50100 Mikkeli (FI)
(72) Inventor: Partanen, Vesa Antero, 50100 Mikkeli (FI)
(74) Representative: Helke, Kimmo Kalervo

(56) References cited:
- WO-A-89/04407
- WO-A-95/16083
- GB-A- 2 216 220
- US-A- 4 669 759

## Description

The object of the invention is an installation device, especially for the installation of feed-through sleeves for water pipes, heating pipes, electrical conduits, and cables, which installation device includes a collar piece to be attached to concrete formwork, which supports the feed-through sleeve during casting. The installation device is removed once the concrete has hardened, leaving the feed-through sleeve attached to the cast concrete.

During building, it is often necessary to make many differently sized and type feed-through holes for pipes in cast walls and vaults, both on the building site and at a factory making precast units. For example, a hole is left during casting or made afterwards, or else before casting a feed-through sleeve with a hard outer casing, supported by a known installation device, is placed before the casting stage. During construction, pipes may not be supported directly on a concrete structure, because of their thermal expansion. A feed-through sleeve prevents the vibration arising from the flow of water from transferring to the concrete structure and to permit the thermal expansion of the pipe.

An installation device for feed-through sleeves is known from Finnish patent publication 79396. This known installation device is designed to support a feed-through sleeve with a hard outer casing, so that the installation device supports the sleeve from its outer casing, i.e. the components are disposable as they remain inside the concrete mass.

An installation device of a type according to the introduction is known from international patent publication WO 89/04407. Its form includes a flanged cup, which is attached to the formwork. The relatively shallow cup is attached by its flanges to the formwork. A single cup provides a poor moment support, so that such cups are required at both ends of the sleeve. Because of this, it is not very suitable for horizontal casting, in which the upper surface of the cast remains free. Each size of pipe requires its own cup attachment.

The making of a hard casing on a bendable, flexible sleeve is a separate and expensive work stage. A pipe with a hard surface and which is the size of the outer dimension of the elastic sleeve must be made and glued around the flexible sleeve. This cause considerable additional costs, while in addition, a new installation device must always be made for each feed-through component. The external support device prevents the placing of the feed-through pipes close to each other and their placing in confined spaces. The support device cannot be attached to the casting base by means of adhesive mastic, and therefore it cannot be used at all in the steel-surfaced casting support moulds used industrially.

The objective of the aforementioned invention is to create an installation device, by means of which the above problems can be avoided and installation simplified. The characteristics of the invention are described in the accompanying Patent Claims.

The installation device comprises two separate parts, a support component and an installation collar, in which the support piece is attached to the casting base by screwing, nailing, or gluing, after which a removable installation collar is set into the collar part, which is supported coaxially by the support component secured to the casting base. A feed-through sleeve with an internal dimension that is the same as the external dimension of the installation collar is placed around the latter. These operations are carried out before the casting mass is spread.

When the casting mould is removed, the support component attached to it also detaches, while the installation collar remains inside the elastic sleeve, from where it can easily be removed. The sleeve attached to the hardening concrete mass remains inside the hole created. The installation collar is freed from the attachments to the casting base and the support components can be reused. The external dimension of the base of the support component is nearly the same or smaller than the external dimension of the sleeve, in which case the distance of the sleeves from each other can be zero and they are therefore suitable for installation in confined spaces.

Industrial manufacture of the installation device is economical, because the support component has a standard size and only the thickness and height of the support bar change. Its use is also economical, because only the sleeve remains in the cast mass. In what follows, the support device according to the invention is described in detail with reference to the accompanying drawings, in which
- Figures 1a and 1b: show the support component from above and from the side
- Figure 2: shows the support component, the installation collar, and the feed-through sleeve in the position of use as components in partial cross-section
- Figure 3: shows the components of Figure 2 set in cast concrete
- Figures 4a - 4d: show the installation collar series.

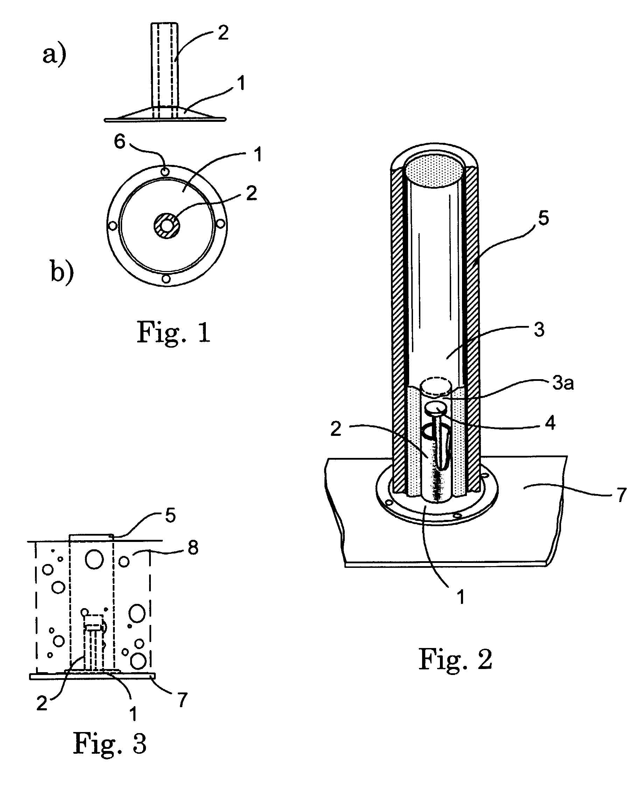

The support component 1, 2 consists of a conical base 1 and a support collar 2 permanently attached to it at right angles, in which there is a coaxial hole for attachment. The circumference of the base 1 has auxiliary holes 6 for possible additional attachments, Figures 1a and 1b. The support collar 2 is economically formed by a steel pin and its lower end is turned to be narrower than the rest of it. Base 1 is economically formed by a pressed sheet metal component, which is attached to the shoulder of the steel pin by a push fit, in which case base 1 and support collar 2 form a stiff totality,

The support component 1, 2 is attached to the casting base, generally concrete formwork 7, principally by means of an attachment 4 in the hole in the centre of the support collar 2, in the installation of which force can be used as the support collar extends to the concrete formwork. In Figure 2, support component 1, 2 has a separate installation collar 3 set in place, in one end of which there is a hole 3a, the size of the external dimension of support collar 2, machined, from which the installation collar 3 is detachably supported on support component 1, 2. An elastic feed-through sleeve 5, the internal dimension of which is the same as the external dimension of the installation collar 3 is set on the latter and remains in the hardening concrete mass 8. The installation collar 3 and possibly also the feed-through sleeve 5 are sealed by the conical base 1, which also centres the installation collar, if the support collar fits onto it loosely.

When installing the installation device to concrete formwork 7, the support component 1, 2 is initially attached to the concrete formwork 7 by alternatively nailing, screwing, etc. the attachment 4 through the central hole of the support collar 2, or by gluing the support component 1, 2 to concrete formwork 7 by its base 1.

After the attachment of support component 1, 2, installation collar 3 is set in place, this being attached removably through opening 3a suitably to support collar 2. The diameter of the opening of installation collar 3 is the same as the external dimension of support collar 2.

The dimensions of support component 1, 2 are standard, but the installation collars comprise a series equipped with different external diameters, when the external dimensions vary according to the required feed-through hole and the length of installation collar 3 vary according to the thickness of the casting 8.

When the concrete formwork 7 is struck from the hardened concrete mass 8, the support component 1, 2 generally separates from the installation collar 3 that remains on the formwork and inside sleeve 5. Support component 1, 2 can easily be separated from attachment 4 of the concrete formwork 7. The installation collar 3 is removed from the flexible sleeve 5 and the components can be used again.

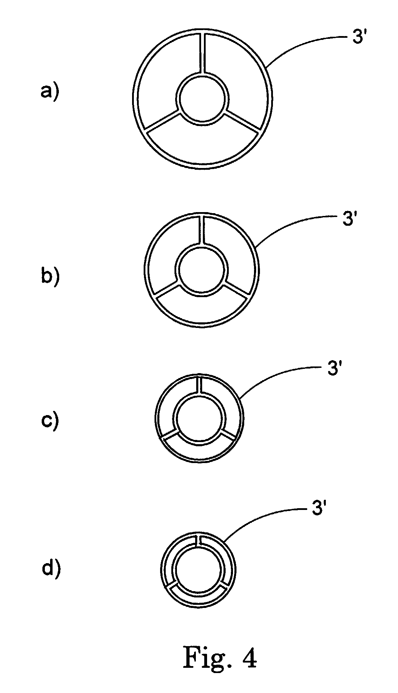

Installation collars can be advantageously manufactured from plastic section according to Figures 4a - 4d. In all the installation collars 3' of the series, the internal hole is the same size as the diameter of the aforementioned support collar 2. Installation collar 3, 3' is advantageously closed at the end, unless it is supported on both sides. The open pipe can be closed by means of a separate plug.

## Claims

1. An installation device (1, 2, 3) especially for the installation of a feed-through sleeve (5) required for the feed-through of water pipes, heating pipes, electrical conduits, and cables, which installation device includes a collar component (3) to be attached to the concrete formwork, which supports the feed-through sleeve (5) during casting, and which collar component is removed after the concrete has hardened, leaving the feed-through sleeve attached to the cast concrete, characterized in that the installation device comprises a support component (1, 2) and an installation collar (3) set concentrically around it, in which the support component in turn comprises a support collar (2) and a base (1) supporting it, and which support component (1, 2) is arranged to be first attached to the concrete formwork (7), after which the installation collar (3) can be removably set around the support collar (2) for the installation of the feed-through sleeve (5).

2. An installation device according to Claim 1, characterized in that the support collar (2) of the support component (1, 2) extends as one piece through the conical base (1) to the concrete formwork (7).

3. An installation device according to Claim 2, characterized in that the base (1) is conical with a large radius around the support collar (2), in which case it centres the installation collar.

4. An installation device according to Claims 1, 2, or 3, characterized in that when attaching the feed-through sleeve (5) to the casting mass (8), the support component (1, 2) and the installation collar (3), which do not attach to the casting mass (8), are arranged to be reusable after being detached.

5. An installation device according to Claim 2, characterized in that the support collar (2) is a steel pin and the base (1) sheet metal pressed into shape, and that the base (1) is attached to the narrowed lower end of the support collar (2) at the central hole by means of a push fit.

6. An installation device according to one of the above Claims 1 - 4, characterized in that the installation collar (3) is a plastic section.

7. An installation device according to Claim 6, characterized in that the installation device includes a series of installation collars (3') with varying diameters, the internal diameters of which are the same size and thus fit the same support component (1, 2).

8. An installation device according to one of the above Claims 1 - 7, characterized in that the upper end of the installation collar (3) is closed to prevent the casting mass from coming into contact with the support component.

9. An installation device according to one of the above Claims 1 - 8, characterized in that the attachment of the support component is arranged to take place by means of an attachment (4) penetrating the centres of the support collar (2) and the base (1).

## Patentansprüche

1. Insbesondere zum Einbau bei der Durchführung von Wasserleitungen, Heizungsleitungen, elektrischen Isolierrohren und Kabeln erforderlicher Durchführungsschutzrohre (5) dienende Montagevorrichtung (1,2,3), die ein an der Betonschalung zu befestigendes Hülsenteil (3) umfaßt, welches das Durchführungsschutzrohr (5) während des Betonierens sttzt, und das nach Erhärten des Betons entfernt wird, während das Durchführungsschutzrohr im Beton verbleibt, dadurch gekennzeichnet, daß die Montagevorrichtung ein Stützteil (1,2) und eine an diesem konzentrisch anzubringende Montagehülse (3) hat, -wobei das Stützteil eine Stützhülse (2) und einen diese stützenden Standfuß (1) hat und das Stützteil (1,2) zuerst an der Schalung (7) befestigt wird, wonach die Montagehülse (3) zwecks Einbaus des Durchführungsschutzrohres (5) ausbaubar um die Stützhülse (2) herum angeordnet werden kann.

2. Montagevorrichtung nach Anspruch 1, dadurch gekennzeichnet, daß sich die Stützhülse (2) des Stützteils (1,2) in einem Stück durch das konische Fußteil (1) hindurch bis zur Schalung (7) erstreckt.

3. Montagevorrichtung nach Anspruch 2, dadurch gekennzeichnet, daß das Fußteil (1) um die Stützhülse (2) herum über einen großen Radius konisch geformt ist, so daß es die Montagehülse zentriert.

4. Montagevorrichtung nach irgendeinem der Ansprüche 1 bis 3, dadurch gekennzeichnet, daß, während das Durchführungsschutzrohr fest in die Gußmasse (8) eingebettet wird, das Stüzteil (1,2) und die Montagehülse (3), die nicht in der Gußmasse (8) verbleiben, für eine Neuverwendung nach erfolgtem Ausbau eingerichtet sind.

5. Montagevorrichtung nach Anspruch 2, dadurch gekennzeichnet, daß die Stützhülse (2) aus einem Stahlbolzen und das Fußteil (1) aus formgepreßtem Blech besteht und über seine Zentralöffnung durch Klemmpassung an dem dünner geformten unteren Ende der Stützhülse (2) befestigt ist.

6. Montagevorrichtung nach irgendeinem der Ansprüche 1 bis 4, dadurch gekennzeichnet, daß die Montagehülse (3) aus Kunststoffprofil besteht.

7. Montagevorrichtung nach Anspruch 6, dadurch gekennzeichnet, daß sie einen Satz in ihrem Außendurchmesser verschiedener Montagehülsen (3') umfaßt, die jedoch alle den gleichen lichten Durchmesser haben und somit zum gleichen Stützteil 1,2) passen.

8. Montagevorrichtung nach irgendeinem der Ansprüche 1 bis 7, dadurch gekennzeichnet, daß das obere Ende der Montagehülse (3) geschlossen ist und so verhindert, daß Gußmasse mit dem Stützteil in Berührung kommt.

9. Montagevorrichtung nach irgendeinem der Ansprüche 1 bis 8, dadurch gekennzeichnet, daß die Befestigung des Stützteils durch ein die Stützhülse (2) und das Fußteil (1) durchstoßendes konzentrisches Befestigungselement (4) erfolgt.

## Revendications

1. Dispositif d'installation (1,2,3) pour l'installation de gaines de protection pour traversées (5) dans des parois, notamment pour des conduites d'eau courante ou de chauffage, des fils électriques ou des câbles, qui comporte un manchon à fixer dans le coulage de béton et qui maintient la gaine de protection en place pendant le coulage du béton, le manchon d'installation étant retiré après durcissement du béton et la gaine de protection de la traversée restant prise dans le béton qui a été coulé, caractérisé par le fait que le dispositif d'installation comporte un support (1,2) et un manchon de soutien (3) monté de façon coaxiale sur ce dernier ; le support (1,2) comprend un manchon de soutien (2) et une base (1) sur lequel il est maintenu ; le support (1,2) est fixé d'abord sur l'élément de coffrage (7), après quoi le manchon d'installation (3) peut être placé autour du manchon de soutien (2), de sorte qu'il reste amovible, en vue de l'installation d'une gaine de protection pour traversées (5).

2. Dispositif d'installation conforme à la revendication 1 caractérisé par le fait que le manchon de soutien (2) du support (1,2) se poursuit d'une seule pièce à travers la base conique jusqu'à l'élément de coffrage (7).

3. Dispositif d'installation conforme à la revendication 2 caractérisé par le fait que la base (1) entourant le manchon de soutien (2) est un cône d'un large rayon, ce qui a pour effet de centrer le manchon de soutien.

4. Dispositif d'installation conforme aux revendications 1, 2 ou 3 caractérisé par le fait que lorsque la gaine de protection pour traversées (5) reste prise dans la masse de béton (8), le support (1,2) et le manchon d'installation (3), qui ne restent pas pris dans la masse (8), étant conçus pour être réutilisables.

5. Dispositif d'installation conforme à la revendication 2 caractérisé par le fait que le manchon de soutien (2) est une cheville d'acier et la base (1) est faite de tôle pressée, et que la base (1) est fixée par un ajustement par serrage à l'extrémité rétrécie du manchon de soutien (2).

6. Dispositif d'installation conforme à l'une des revendications 1-4 caractérisé par le fait que le manchon d'installation (3) est fait d'un profilé de plastique.

7. Dispositif d'installation conforme à la revendication 6 caractérisé par le fait que le dispositif comporte une série de manchons d'installation (3') de différent diamètre extérieur et dont le diamètre intérieur est fixe, ce qui permet de les adapter sur le même support (1,2).

8. Dispositif d'installation conforme aux revendications 1-7 ci-dessus caractérisé par le fait que l'extrémité supérieure du manchon d'installation (3) est fermée et empêche ainsi la masse de béton d'entrer en contact avec le support (1,2).

9. Dispositif d'installation conforme à l'une des revendications 1-8 caractérisé par le fait que la fixation du support est prévue pour être réalisée par l'intermédiaire d'une fixation (4) traversant le centre du manchon de soutien (2) et de la base (1).
